# EUROPEAN PATENT APPLICATION

(11) **EP 1 441 367 A2**
(43) Date of publication of application: **28.07.2004**
(21) Application number: 04001296.5
(22) Date of filing: 22.01.2004
(51) Int. Cl.: H01B 12/16

(54) **Superconducting cable**

(30) Priority: 23.01.2003 JP 2003014711
(71) Applicant: SUMITOMO ELECTRIC INDUSTRIES, Ltd, Osaka-shi, Osaka 541-0041 (JP)
(72) Inventor: Hirose, Masayuki, Konohana-ku, Osaka-shi, Osaka 554-0024 (JP)
(74) Representative: Kreutzer, Ulrich, Dipl.-Phys.

(57) **Abstract**

A superconducting cable includes: a cable core having a superconducting conductor; a thermal insulation pipe accommodating the cable core and functioning as a forward path of a coolant channel; and a coolant return pipe disposed beside the cable core in the thermal insulation pipe and functioning as a backward path of the coolant channel. A coolant is passed through a space formed between the thermal insulation pipe and the cable core/the coolant return pipe, and cools the cable core and the coolant return pipe. The coolant that has cooled the cable core, etc., returns through the coolant return pipe. Thus, the heat loss of a coolant in the superconducting cable can be minimized, and the space needed for coolant piping can be made compact.

## Description

### BACKGROUND OF THE INVENTION

### 1. Field of the Invention

The present invention relates to a superconducting cable, and, more particularly, to a superconducting cable having a cable core whose central portion is a solid type.

### 2. Description of the Related Art

In general, a superconducting cable is formed by putting a single cable core or cable cores, which are stranded together for providing a high capacity, into a thermal insulation pipe (refer to, for example, Japanese Unexamined Application Publication No. 9-134624 and Japanese Unexamined Patent Application Publication No. 2001-202837).

A cable core includes a former, a superconducting conductor, an electrical insulation layer, and a shielding layer, in the enumerated order sequentially from the center. The thermal insulation pipe is a double metal pipe which includes an inner pipe and an outer pipe. The cable cores are accommodated in the inner pipe. In general, the former is formed of a pipe, and a space in the former and a space between the thermal insulation pipe and the cable core form a coolant channel. The superconducting conductor is formed by stranding superconducting wires into a plurality of layers in a manner such that the spiral pitches and winding directions of the superconducting wires are adjusted so that electric current may flow uniformly by making the impedance of the respective layers equal to each other. The shielding layer is formed using superconducting wires in a similar structure as the superconducting conductor.

In such a superconducting cable, the cable core is cooled by passing a coolant through the space in the former and the space between the inner pipe and the cable core. Ordinarily, liquid nitrogen is used as the coolant.

The coolant is cooled by a cooling system, such as a refrigerator or a heat exchanger, in order to maintain the long superconducting cable always at cryogenic temperature. In other words, a coolant circulating system is structured such that the coolant cooled by the refrigerator flows through the former, then through the gap between the inner pipe and the cable cores, and returns to the refrigerator so as to be re-cooled.

In the aforementioned superconducting cable, a closed loop of the coolant channel can be formed by using the space inside the former made of a pipe as a forward path and the space in the outside of the cores as a backward path.

However, when a metal pipe is used as the former, the high bending-rigidity of the pipe is a problem in terms of mechanical properties, such as bending property and lateral pressure, of the superconducting cable. In order to improve, for example, the bending property, a corrugated metal pipe may be used as the former. However, since superconducting wires are wound around the former, it is necessary to add a structure for smoothing the outer side of the corrugated metal pipe, thereby complicating the structure. In addition, a structure for connecting the coolant forward path in the former to the coolant backward path at the outer side of the core becomes complicated.

To improve the mechanical properties, the use of a solid former formed of, for example, stranded metal wires instead of a pipe has been proposed. The structure using stranded wires for the former is effective for restricting a temperature rise caused by a short-circuit current flow.

When such a solid former is used, a coolant channel cannot be formed in the former. Therefore, a conceivable structure is such that one end of the thermal insulation pipe is provided with a coolant inlet pipe for supplying a coolant into the space between the inner pipe and the cable cores, and the other end of the thermal insulation pipe is provided with a coolant outlet pipe for taking out the coolant from the inner pipe. In this case, a coolant circulating system is formed by connecting the coolant outlet pipe to the coolant inlet pipe through a refrigerator.

In such a coolant circulating system, the coolant flowing through the coolant outlet pipe or the coolant inlet pipe is subjected to heat loss resulting from heat exchange with ambient air outside the thermal insulation pipe. Therefore, the refrigerating capacity of the refrigerator must be increased. In particular, when the refrigerator is disposed near a coolant inlet portion of the thermal insulation pipe, the coolant outlet pipe needs to be disposed in a length from the other end to one end of the thermal insulation pipe. Therefore, the outlet pipe becomes long, thereby increasing heat loss correspondingly and making it necessary to provide a wide space for disposing the outlet pipe.

### SUMMARY OF THE INVENTION

It is an object of the present invention to provide a superconducting cable in which the heat loss of a coolant can be minimized and which allows the space needed for coolant piping arrangement to be compact.

To this end, the superconducting cable of the present invention includes at least a cable core having a superconducting conductor; a thermal insulation pipe which accommodates the cable core and in which a forward path of a coolant channel is formed; and a coolant return pipe disposed beside the cable core in the thermal insulation pipe and used as a backward path of the coolant channel.

In the present invention, it is possible to reduce the heat loss of a coolant flowing through the coolant return pipe because the coolant that has flown into the coolant return pipe can be cooled, by the coolant in the thermal insulation pipe, until the coolant that has flown into the coolant return pipe flows out of the thermal insulation pipe.

The coolant return pipe of the present invention may be a metal pipe having the same diameter in the longitudinal direction, or a corrugated metal pipe. When the coolant return pipe is a corrugated metal pipe, the amount of force for bending the coolant return pipe can be reduced such that mechanical damage to the cable core is prevented. In addition, since an increase in the bending rigidity of the superconducting cable can be lessened, it is possible to prevent degradation of the mechanical properties (such as the bending property and lateral pressure) of the cable.

In the superconducting cable of the present invention, preferably a coolant inlet for supplying a coolant to the coolant channel in the thermal insulation pipe is disposed at one end of the thermal insulation pipe; near the coolant inlet, one end of the coolant return pipe opens to the outside of the thermal insulation pipe; and the other end of coolant return pipe is connected with the other end of the thermal insulation pipe so as to communicate to the inside of the thermal insulation pipe.

Since the location where the coolant return pipe opens to the outside of the thermal insulation pipe is near the coolant inlet, it is possible to minimize the length of the pipe from a location where the coolant flows out of the thermal insulation pipe to a location where it returns to the refrigerator. As a result, it is possible to minimize not only the heat loss of the coolant caused outside the thermal insulation pipe, but also the space for the pipe arrangement in the vicinity of the thermal insulation pipe.

It is possible to reduce the heat loss of the coolant caused at the time of recovery thereof because the portion of the coolant piping to be disposed outside the thermal insulation pipe can be reduced since the boundary between the forward path and the backward path of the coolant channel is provided in the thermal insulation pipe which is the cable body.

The superconducting cable of the present invention may have a structure in which a coolant inlet for supplying a coolant to the coolant channel is disposed at one end of the thermal insulation pipe and the coolant outlet for taking out the coolant in the thermal insulation pipe is disposed at the other end of the thermal insulation pipe. In this structure, near the coolant inlet, one end of the coolant return pipe opens to the outside of the thermal insulation pipe and the other end of the coolant return pipe opens to the outside of the thermal insulation pipe at the other end of the thermal insulation pipe, and the coolant outlet and the other end of the coolant return pipe is connected to communicate each other.

In this case, if piping is connected to the coolant outlet and the opening at the other end of the coolant return pipe, it is possible to not only connect the coolant outlet and the coolant return pipe through the piping, but also connect or switch to another similar superconducting cable that is disposed beside the superconducting cable through the piping.

In the case where the coolant outlet for taking out the coolant in the thermal insulation pipe is disposed at the other end of the thermal insulation pipe, and the other end of the coolant return pipe opens to the outside of the thermal insulation pipe from the other end of the thermal insulation pipe, the coolant return pipe may be accommodated in the thermal insulation pipe. By this, it is possible to reduce heat loss of the coolant flowing in the coolant return pipe.

### BRIEF DESCRIPTION OF THE DRAWINGS

Figure 1 is a sectional view of a superconducting cable of an embodiment of the present invention;
Figure 2 is a diagram showing a coolant circulating system of the superconducting cable of an embodiment of the present invention; and
Figure 3 is a diagram showing a coolant circulating system of the superconducting cable of another embodiment of the present invention.

### DESCRIPTION OF THE PREFERRED EMBODIMENT

Hereunder, an embodiment of the present invention will be described. A superconducting cable of the present invention can be used as an alternating current (AC) superconducting cable or a direct current (DC) superconducting cable. Both an AC superconducting cable line and a DC superconducting cable line can be formed using the superconducting cable of the present invention.

A cable core used in the present invention includes, sequentially from the center, for example, a former, a superconducting conductor, and an electrical insulation layer.

Although the former may be a solid type using metal wires stranded together or a hollow type using a metal pipe, the present invention is suitable for the solid former.

When the former is a solid type, stranded metal wires, such as stranded copper wires, may be used considering the mechanical properties of the cable. When metal wires are used, it is desirable to insulate the metal wires in order to reduce eddy current loss.

It is suitable that the superconducting conductor is formed by spirally winding superconducting tapes around the former. For example, a superconducting tape is made of an oxide high-temperature superconductor, such as bismuth (Bi) based superconductor, covered with a silver sheath. Preferably, such superconducting tapes are wound in a stack of even number of layers, with the winding directions of two adjacent layers being in opposite directions. Here, the winding pitch should be the same for each pair of superconducting tapes having different winding directions or for each layer of superconducting tape. By virtue of such a conductor structure, it is possible to cancel magnetic fields in the axial direction that leak to the outside.

The electrical insulation layer may be formed of any of various known-insulating materials. The electrical insulation layer may have a structure in which an insulated paper made of polypropylene is soaked with liquid nitrogen, for example.

In the cable of the present invention, a shielding layer for magnetic shielding may be disposed at each cable core. When the cable of the present invention is used as an AC superconducting cable, the shielding layer can reduce AC loss of the superconducting wires by shielding the magnetic flux that leaks to the outer periphery of the superconducting conductor.

A single cable core or three stranded cable cores may be used. When three stranded cable cores are used, thermal contraction can be absorbed by, for example, disposing the stranded cable cores in a snake-like form, or stranding the cable cores in a loose manner, or providing a spacer between the cores.

Preferably, the thermal insulation pipe has a double pipe structure which includes, for example, corrugated SUS inner and outer pipes, with the space between them being maintained in a vacuum state.

A coolant return pipe is disposed in the thermal insulation pipe, extending in the same direction as the longitudinal direction of a cable core. The coolant return pipe disposition in the thermal insulation pipe is determined by the relationship among the inner diameter of a coolant return pipe, the number of coolant return pipes, and the flow rate of a coolant.

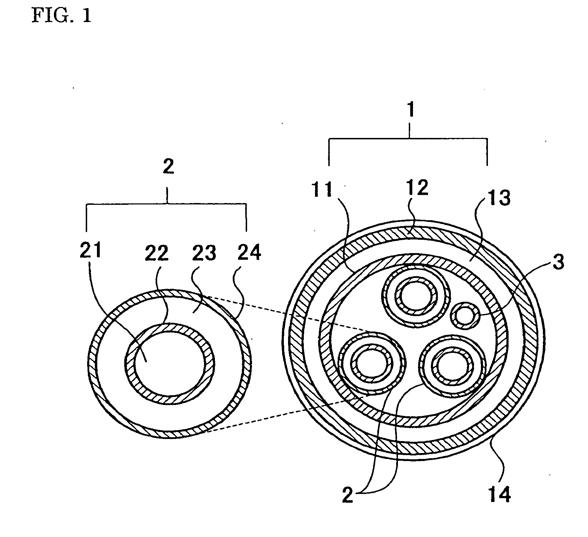

For example, when a single cable core is used, one coolant return pipe may be disposed beside the single cable core in the thermal insulation pipe. When three stranded cable cores are used, a plurality of coolant return pipes (for example, three) may be disposed beside the three cores. However, considering economical efficiency, it is desirable to use one coolant return pipe in cross section as shown in Fig. 1.

A coolant passes through a space formed between the thermal insulation pipe and a cable core/a coolant return pipe, that is, around the cable core and the coolant return pipe in the thermal insulation pipe and cools the cable core and the coolant return pipe. The coolant that has cooled the cable core and the coolant return pipe returns through the coolant return pipe. In other words, in the present invention, the space between the thermal insulation pipe and the cable core/coolant return pipe is a forward path of a coolant channel, and a space in the coolant return pipe is a backward path of the coolant channel.

A coolant circulating system may be formed such that the coolant that has returned through the coolant return pipe is re-cooled by a heat exchanger or a refrigerator disposed outside the superconducting cable, and subsequently the re-cooled coolant is flowed into the thermal insulation pipe.

Hereunder, the present invention will be described in more detail. In the figures, corresponding parts are given the same reference numerals, and descriptions of the corresponding parts will not be repeated. The dimensional scales in the drawings are not necessarily the same as those in the description. Figure 1 is a sectional view of a superconducting cable of an embodiment of the present invention.

### [Overall Structure]

In the cable, three stranded cable cores 2 are accommodated in a thermal insulation pipe 1. A coolant return pipe 3 is also accommodated in the thermal insulation pipe 1.

### [Thermal Insulation Pipe]

The thermal insulation pipe 1 includes a double pipe which has an inner pipe 11 and an outer pipe 12. A vacuum thermal insulated layer 13 is formed between the inner and outer pipes 11 and 12. A so-called super-insulation consisting of a plastic reticular member and a metallic foil stacked upon each other is disposed in the vacuum thermal insulated layer 13.

A space formed between the inner side of the inner pipe 11 and the cable cores 2/the coolant return pipe 3 is a forward path of a coolant channel of, for example, liquid nitrogen. The coolant return pipe 3 is a backward path of the coolant channel. If necessary, an anticorrosion layer 14, made of, for example, polyvinyl chloride may be formed around the thermal insulation pipe 1.

### <Coolant Channel>

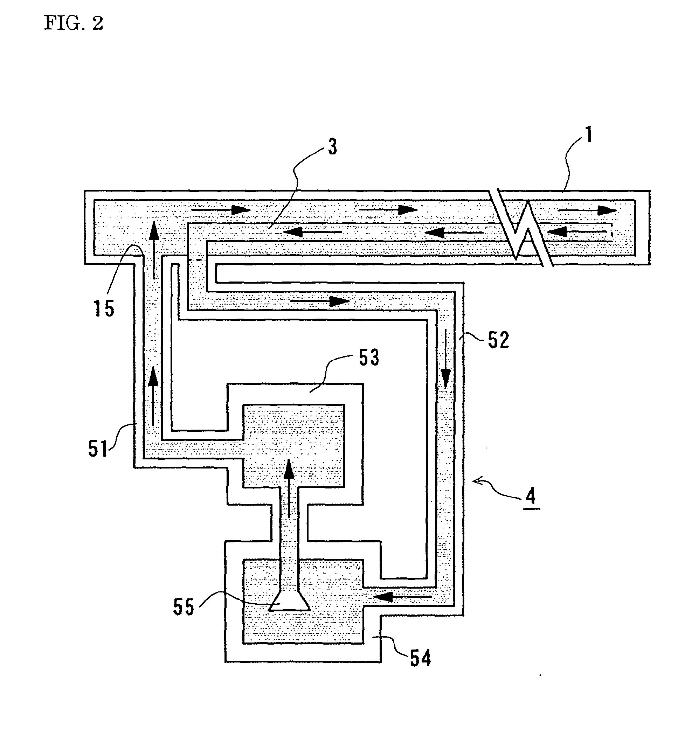

As shown in Fig. 2, a coolant inlet 15 for supplying a coolant to the space formed between the thermal insulation pipe 1 and the cable cores 2/the coolant return pipe 3 is provided at the thermal insulation pipe 1. In the embodiment, the coolant inlet 15 is disposed at one end of the thermal insulation pipe 1. The forward path of the coolant channel is formed in the inner pipe 11 such that the coolant is supplied from the coolant inlet 15 into the inner pipe 11 of the thermal insulation pipe 1.

As shown in Figs. 1 and 2, the coolant return pipe 3 is separately disposed beside the cable cores 2, and is accommodated in the longitudinal direction of the cable cores 2 within the inner pipe 11 of the thermal insulation pipe 1. The coolant return pipe 3 is a corrugated metal pipe.

Near the coolant inlet 15, one end of the coolant return pipe 3 opens to the outside of the thermal insulation pipe 1. The other end of the coolant return pipe 3 opens into the inner pipe 11 of the thermal insulation pipe 1, as shown in Fig. 2, at the other end, which is situated away from the coolant inlet 15, of the thermal insulation pipe 1. In the embodiment shown in Fig. 2, a coolant that has cooled the cable cores 2 returns from the opening at the other end of the coolant return pipe 3.

In the superconducting cable of the present invention, the space formed between the thermal insulation pipe 1 and the cable cores 2/the coolant return pipe 3 is the forward path of the coolant channel. The space in coolant return pipe 3 is the backward path of the coolant channel. The coolant is passed from the coolant inlet 15 at the thermal insulation pipe 1 through the space formed between the inner pipe 11 and the cable cores 2/the coolant return pipe 3 so as to cool the cable cores 2 and the coolant return pipe 3.

In the embodiment shown in Fig. 2, since the boundary between the forward path and the backward path of the coolant channel can be formed in the thermal insulation pipe 1, it is possible to form the backward path of the coolant channel without disposing coolant piping outside the thermal insulation pipe 1. Accordingly, it is possible to reduce the coolant piping disposed outside the thermal insulation pipe so as to reduce the heat loss of the returning coolant.

In addition, since the coolant return pipe 3 is a corrugated metal pipe, the force for bending the coolant return pipe 3 can be reduced so that mechanical damage to the cable cores 2 may be prevented.

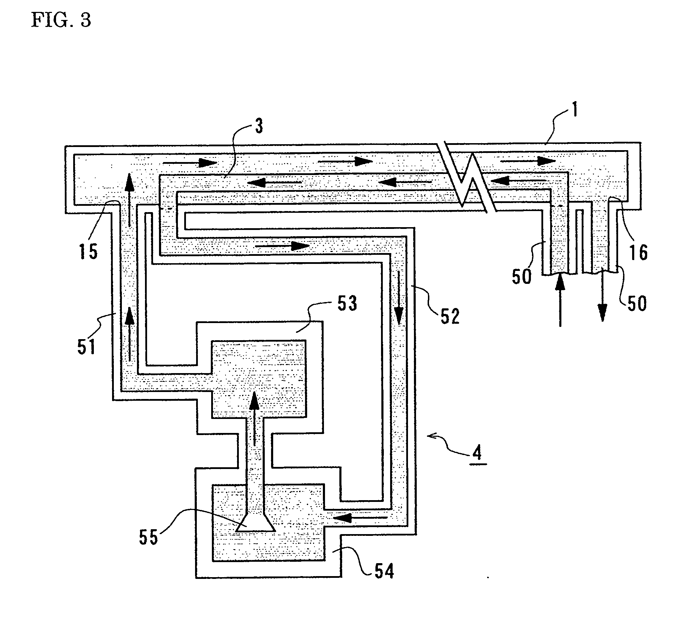

Although, in Fig. 2, the other end of the coolant return pipe 3 opens into the thermal insulation pipe 1, the superconducting cable may be formed as shown in Fig. 3. In the superconducting cable shown in Fig. 3, the coolant inlet 15 is disposed at one end of the thermal insulation pipe 1, and a coolant outlet 16 for taking out the coolant from the thermal insulation pipe 1 is disposed at the other end of the thermal insulation pipe 1 such that the other end of the coolant return pipe 3 opens to the outside therefrom.

In this case, if coolant piping 50 is connected to the opening at the other end of the coolant return pipe 3 and the coolant outlet 16, it is possible to not only connect the coolant outlet 16 and the coolant return pipe 3 through the piping 50, but also connect or switch to another similar superconducting cable through the coolant piping 50.

Further, in the embodiment shown in Fig. 2, a coolant circulating system 4 is formed so that the coolant is supplied into the thermal insulation pipe 1 of the superconducting cable, returns from the coolant return pipe 3, and is cooled.

### <Coolant Circulating System>

The coolant circulating system 4 includes the coolant forward path formed in the thermal insulation pipe 1, the coolant return pipe 3, first coolant piping 51, second coolant piping 52, a refrigerator 53, a reservoir 54, and a pump 55.

One end of the first coolant piping 51 is connected to the coolant inlet 15 disposed at the thermal insulation pipe 1. One end of the second coolant piping 52 is connected to the coolant return pipe 3. The other end of the first coolant piping 51 is connected to the refrigerator 53. The other end of the second coolant piping 52 is connected to the reservoir 54. The pump 55 is disposed in the reservoir 54. A coolant in the reservoir 54 is sent to the refrigerator 53 by the pump 55.

When the pump 55 operates, a coolant cooled by the refrigerator 53 passes through the first coolant piping 51, flows into the thermal insulation pipe 1 from the coolant inlet 15, and, then, flows through the coolant return pipe 3 and the second coolant piping 52, and returns to the reservoir 54 to be re-cooled by the refrigerator 53.

In the embodiment shown in Fig. 2, the coolant that has flown into the coolant return pipe 3 is cooled by a coolant in the thermal insulation pipe 1 until the coolant in the coolant return pipe 3 flows outside the thermal insulation pipe 1.

Since, the position where the coolant return pipe 3 opens to the outside of the thermal insulation pipe 1 is near the coolant inlet 15, it is possible to minimize the length of the second coolant piping 52 from the opening of the coolant return pipe 3 to the reservoir 54. As a result, in the coolant circulating system 4, it is possible to minimize heat loss of the coolant outside the thermal insulation pipe 1, and a large space is not required for the pipe arrangement outside the thermal insulation pipe 1.

### [Cable Core]

As shown in Fig. 1, each cable core 2 accommodated in the thermal insulation pipe 1 includes, sequentially in the enumerated order from the center, a former 21, a superconducting conductor 22, an electrical insulation layer 23, and a shielding layer 24.

### <Former>

A former 21 may be a solid type, which is made of stranded metal wires, or a hollow type, which uses a metal pipe. When the former is a hollow type, a coolant channel may be formed therein. However, considering the mechanical properties of the cable, a solid type former is desirable. An example of a solid former includes copper wires that are stranded together. It is desirable to insulate each copper wire in order to reduce eddy current loss.

### <Superconducting Conductor>

A material suitable for superconducting conductor 22 is an oxide high-temperature superconducting tape, such as a Bi based superconductor, covered with a silver sheath. Such tapes are wound in a plurality of layers around the former 21 to form a conductor. It is desirable that the superconducting wires be wound in an even number of layers, and that the winding directions of two adjacent layers be in opposite directions. With such layered structure, the reduction in the leakage of magnetic flux to the outside can be achieved. It is desirable that spiral pitches and winding directions be adjusted so that electric current flows uniformly by making the impedance of the layers of the superconducting wires equal to each other.

### <Electrical Insulation Layer>

An electrical insulation layer 23 is formed around the superconducting conductor 22. The electrical insulation layer 23 is formed by winding an insulating paper made of, for example, craft paper or polypropylene (such as PPLP (a registered trademark of Sumitomo Electric Industries Co., Ltd.)) around the superconducting conductor 22.

### <Shielding Layer>

When the superconducting cable is an AC superconducting cable, a shielding layer 24 for magnetic shielding is disposed around the electrical insulation layer 23. The shielding layer 24 is formed by winding superconducting wires around the outer periphery of the electrical insulation layer 23. The magnetic fields generated to the outside can be cancelled because electric current induced in the shielding layer 24 flows in the direction opposite to, and in about the same amount with, the electric current in the superconducting conductor 22.

### [Stranded Core Structure]

In one embodiment of the present invention, three stranded cores are used. Here, thermal contraction can be absorbed by, for example, disposing the stranded cable cores 2 in a snake-like form in the thermal insulation pipe 1, or stranding the cable cores 2 in a loose manner, or providing a spacer between the cable cores 2.

A technology disclosed in Japanese Unexamined Patent Application Publication No. 1-309212 can be applied to arranging the stranded cable cores 2 in a snake-like form. For example, the arrangement of snake-like form may be achieved by forming protrusions in the thermal insulation pipe so that the stranded cores inserted into the thermal insulation pipe can be accommodated therein in a snake-like form.

## Claims

1. A superconducting cable comprising:
a cable core having a superconducting conductor;
a thermal insulation pipe accommodating the cable core, a forward path of a coolant channel being formed in the thermal insulation pipe; and
a coolant return pipe disposed beside the cable core in the thermal insulation pipe and functioning as a backward path of the coolant channel.

2. A superconducting cable according to Claim 1, wherein the coolant return pipe is a corrugated metal pipe.

3. A superconducting cable according to either Claim 1 or Claim 2, wherein a coolant inlet for supplying a coolant into the thermal insulation pipe is disposed at one end of the thermal insulation pipe; near the coolant inlet, one end of the coolant return pipe opens to the outside of the thermal insulation pipe; and at other end of the thermal insulation pipe, the other end of coolant return pipe communicates to the inside of the thermal insulation pipe.

4. A superconducting cable according to either Claim 1 or Claim 2, wherein a coolant inlet for supplying a coolant to the coolant channel is disposed at one end of the thermal insulation pipe, and a coolant outlet for taking out the coolant from inside the thermal insulation pipe is disposed at the other end of the thermal insulation pipe; and wherein near the coolant inlet, one end of the coolant return pipe opens to the outside of the thermal insulation pipe, and at the other end of the thermal insulation pipe, the other end of the coolant return pipe opens to the outside of the thermal insulation pipe such that the coolant outlet and the other end of the coolant return pipe are connected to communicate with each other.
